# EUROPEAN PATENT SPECIFICATION

(11) **EP 1 703 959 B1**
(45) Date of publication and mention of the grant of the patent: **05.12.2007**
(21) Application number: 04804345.9
(22) Date of filing: 23.12.2004
(51) Int. Cl.: B01D 29/96

(54) **FILTER FOR INTERNAL COMBUSTION ENGINES**
FILTER FÜR VERBRENNUNGSMOTOREN
FILTRE POUR MOTEURS A COMBUSTION INTERNE

(30) Priority: 15.01.2004 IT RE20040002
(43) Date of publication of application: 27.09.2006
(73) Proprietor: UFI Filters S.p.A., 46047 Porto Mantovano (Mantova) (IT)
(72) Inventor: GIRONDI, Giorgio, I-46100 Mantova (IT)
(74) Representative: Corradini, Corrado
(86) International application number: PCT/EP2004/014756
(87) International publication number: WO 2005/068047

(56) References cited:
- WO-A-02/100511
- US-A1- 2003 196 939

## Description

### TECHNICAL FIELD

The present invention relates, in a totally general sense, to internal combustion engines and more particularly to a filter for liquids, such as oil or diesel fuel, to be associated with said engines.

More specifically, the invention relates to improvements in the filter of WO 02/100511 in the name of the same Applicant.

### PRIOR ART

The filter described in said document comprises a generally cup-shaped casing which is closed by a removable cover; and contains a disposable tubular filter cartridge.

Said cartridge divides the interior compartment of the cup into two chambers, of which one is connected to an inlet conduit for the liquid to be filtered, and the other is connected to an outlet conduit for the filtered liquid.

The cartridge is removably fixed in a sealed manner to the inner region of the cover by a snap connection system, which does not require detailed description. It is sufficient to note that the system comprises first engagement means which extend beyond the inner face of the cover or the facing end face of the cartridge, and second engagement means matching the preceding and extending beyond said facing end face or said inner face, said first and second engagement means being connected together by axially sliding the cover and cartridge towards each other, and being released by rotating the cover and cartridge relative to each other through a predetermined angle.

For other details of said snap connection system reference should be made to the aforesaid document.

A problem which afflicts this known filter arises from the stated projecting arrangement of the constituent means of the snap connection system, which occupies a part of the cup length beyond the filter.

For this reason the filter possesses a filtration capacity less than that which, for the same cup, it would possess if said connection system were absent, because in that case the cup would be able to contain a longer filter.

Moreover the initially stated known art involves the use of a relatively complex and hence relatively unreliable arrangement for associating with the snap connection system a seal for adequately separating the passage chamber for the liquid to be filtered from the passage chamber for the filtered liquid.

### DISCLOSURE OF THE INVENTION

The main object of the present invention is to remedy the aforesaid problem.

Another object of the invention is to achieve said object within the framework of a simple, rational, reliable and low-cost construction of small overall size.

Said objects are attained by a filter having the characteristics indicated in the claims.

In a totally general sense, the filter of the invention comprises a snap connection system between the cover and cartridge which is shaped and dimensioned such that, once engaged, it is practically completely contained within the central compartment passing through the cartridge, where it maintains this latter locked in the immediate vicinity of the cover.

By this means, the longitudinal extent of the snap connection system is practically contained within that of the cartridge, with the result that a longer cartridge than that allowable in the known art can be accommodated within the outer casing of the filter, with evident advantages in terms of filtration characteristics.

Moreover with the aforedefined solution the arrangement for sealing the snap connection system is extremely simplified, as will be apparent hereinafter.

### BRIEF DESCRIPTION OF THE DRAWINGS

The characteristics and the constructional merits of the invention will be more apparent from the ensuing description given with reference to the figures of the accompanying drawings which illustrate a particular preferred embodiment by way of non-limiting example.
Figure 1 is a partially sectioned side view of a filter according to the invention.
Figure 2 shows the detail II indicated in Figure 1 on an enlarged scale.
Figure 3 is a perspective view showing a detail of the filter.
Figure 4 is the section IV-IV of Figure 3.
Figure 5 is a view from below of another detail of the filter.
Figure 6 is the section VI-VI indicated in Figure 5.

### BEST MODE FOR CARRYING OUT THE INVENTION

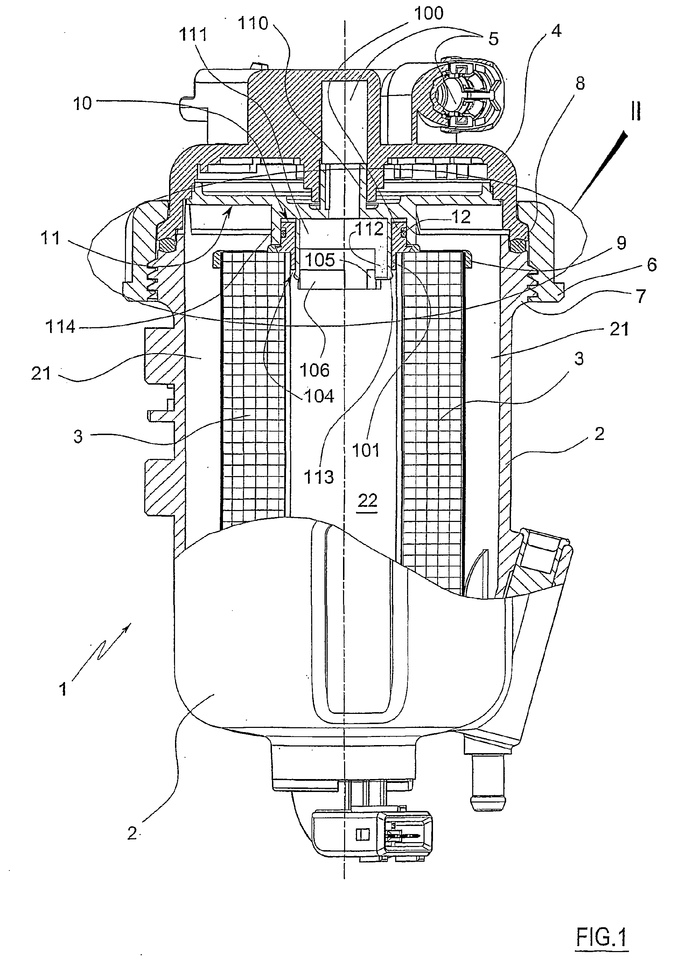

Said figures, and in particular Figure 1, show a filter for liquids, for example oil or diesel fuel, to be installed on an internal combustion engine.

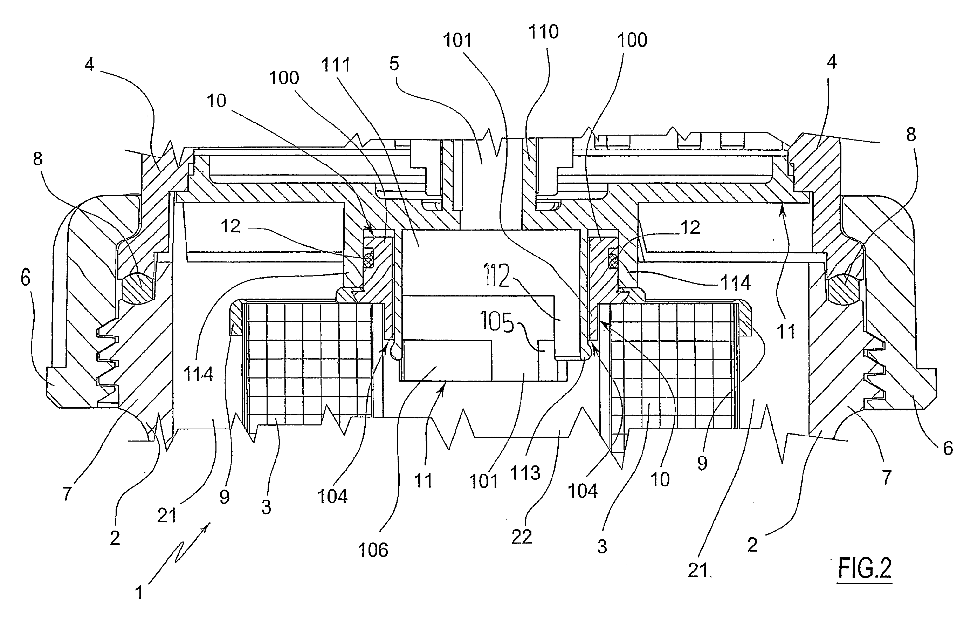

Said filter, indicated overall by 1 in Figures 1 and 2, comprises an outer casing 2 containing a disposable filter cartridge 3, and is closed by a cover 4.

The casing 2 is generally cup shaped, while the cartridge 3 is toroidal and has an outer diameter less than the inner diameter of the casing or cup 2. In this manner the interior cavity of the cup 2 is divided into an outer annular chamber 21 (see Figures 1 and 2) lying between the cup 2 and cartridge 3, and an inner cylindrical chamber 22 provided by the longitudinal central compartment passing through the cartridge 3.

An inlet conduit (not visible in the figures) for the liquid to be filtered opens into the outer chamber 21, the inner chamber 22 communicating with an outlet conduit 5 for the filtered liquid, provided on the cover 4.

The cover 4 is connected to the cup 2 by a ring nut 6 which is screwed onto a threaded collar 7 provided on the outside of the mouth of the cup 2, an annular seal gasket being interposed between the cover 4 and collar 7. The cartridge 3 comprises a circular base ring, not visible in the figures, and a circular head ring, indicated by 9 in Figures 1 and 2, with which an annular body, or bush, 10 is associated.

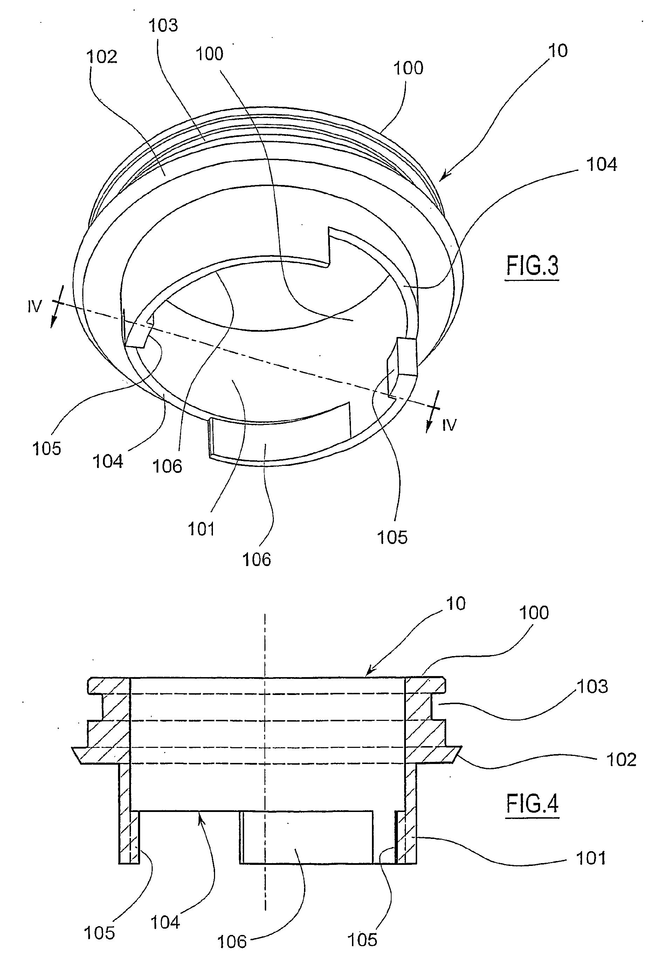

As shown in Figures 3 and 4, the bush 10 comprises an upper annular part 100 and a lower annular part 101 which are of practically the same length but of different outer diameters, of which the lesser diameter pertains to the lower part 101.

The lower part 101 is intended to be inserted practically as an exact fit into the upper portion of the central compartment of the cartridge 3 (see Figures 1 and 2), and locked thereat both axially and radially by the inner annular edge of the ring 9 which rests against a circumferential ledge 102 provided at the base of the upper part 100 (Figures 1 and 2).

Above said ledge 102, said upper part 100 presents a circumferentially outer groove 103 acting as a seat for an annular gasket 12 (Figures 1 and 2).

As shown in Figures 3 and 4, the free end of the lower part 101 comprises a circumferential series of angularly equidistant rectangular recesses which in the illustrated embodiment are two in number.

To one side of each recess 104 there is provided a small internal projection 105, the opposite side thereto being of reduced thickness.

Said side of reduced thickness is provided by a depressed curved transverse surface 106 on the inner cylindrical surface of the bush 10, its centre of curvature being outside the longitudinal axis of said bush 10.

In this manner, starting from said side of reduced thickness, said depressed curved surface has a decreasing depth (Figure 3) which becomes zero at a certain distance from the projection 105 associated with the next recess.

The described bush 10 acts as a means for coupling the cartridge 3 to the disc 11, which is conveniently locked in a suitable lower sunken seat in the cover (see Figures 1 and 2).

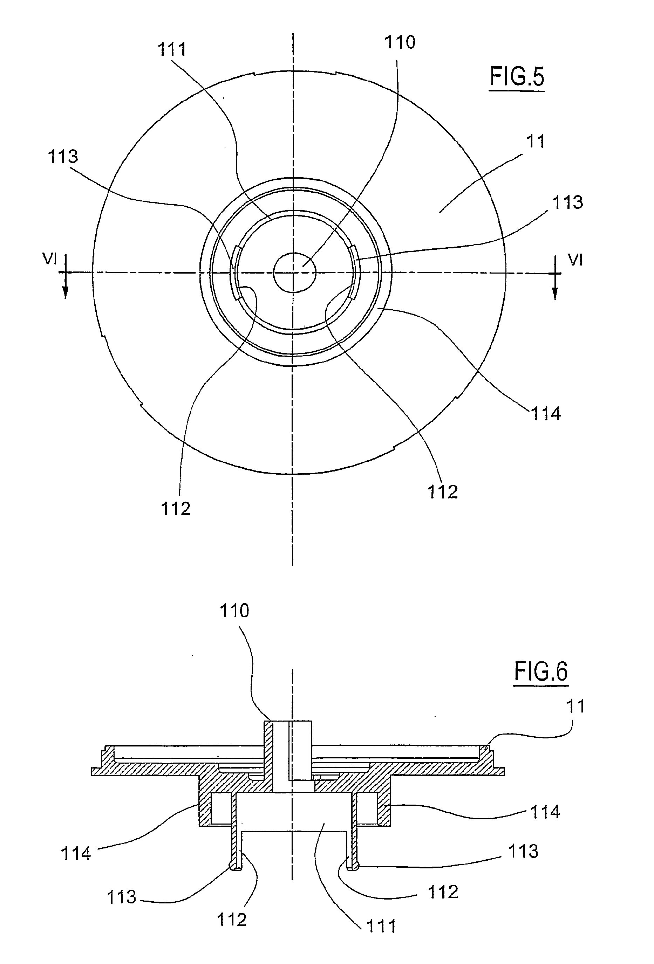

The disc 11 is shown in Figures 5 and 6 and comprises a central hole with which there are associated upwardly a tube 110 which communicates with the outlet conduit 5 (Figure 1), and downwardly a coaxial sleeve 111 which is coaxial with the inner chamber 22 of the filter 1 (Figures 1 and 2). The sleeve 111 has an outer diameter practically equal to the inner diameter of the bush 10 (Figures 1 and 2), and from its lower edge there branch two elastically flexible longitudinal tangs (Figure 6), each shaped as a sector of a cylindrical wall (Figure 5).

The free edge of the tangs 112 presents an outer tooth 113 along its entire width (Figures 1, 2, 5 and 6).

Finally, to the outside of the sleeve 111 there is an enclosing coaxial skirt 114 (Figures 5 and 6), the inner cylindrical surface of which provides the sealing surface for the gasket 12 (Figures 1 and 2).

The cartridge 3 is mounted and removed in the following manner, after separating the casing 2 from the cover 4.

The cartridge 3 is mounted (see Figures 1 and 2) by pushing it from the bottom upwards, with the recesses 104 of the bush 10 aligned with the tangs 112 of the sleeve 111.

During this coupling step, the tangs 112 deform elastically inwards because of the interference between the teeth 113 and the inner surface of the bush 10, the tangs 112 resuming their original configuration on termination of coupling, as the teeth 113 have then passed beyond the bottom edge of the recesses 104, with which they engage.

At the same time the upper part 100 of the bush 10 becomes inserted into the channel lying between the sleeve 111 and the skirt 114, to cause the annular gasket 12 to form a seal. It should be noted that during this step the lower edge of the skirt 114 acts as an abutment to determine the end of insertion of the bush 10.

To remove the cartridge 3, it merely has to be rotated through the angle defined by the projections 105, and pulled downwards.

During said rotation, the teeth 113 slide along the curved surfaces 106, which act as release tracks for the teeth by making them gradually disengage until their outer generators lie in contact with the inner cylindrical surface of the bush 10.

## Claims

1. A filter for internal combustion engine liquids, comprising a casing (2) containing a toroidal filter cartridge (3) which separates the casing cavity into two chambers (21, 22) for passage of the liquid to be filtered and passage of the filtered liquid respectively; a removable cover (4) closing said cavity and comprising the inlet and outlet conduits for the liquid; the region of the cover facing the casing being connected to the facing end of the cartridge by a snap connection system comprising two complementary parts (10, 111) which are associated with the cover and with the cartridge respectively, and can be connected together by axially sliding said cartridge, **characterised in that** that part (10) of the system associated with the cartridge is located within the central compartment of this latter, and that part (111) of the system associated with the cover comprises longitudinal elastic tangs (112) suitable to be axially inserted into that part associated with the cartridge and coupled thereto, and to be rotated of a predetermined angle to be released there from.

2. A filter as claimed in claim 1, **characterised in that** that system part (10) installed on the cartridge comprises an annular body (100), a part of which is inserted into said central compartment, where it provides the receiving seat for the snap connection of the part (111) installed on the cover.

3. A filter as claimed in claim 2, **characterised in that** said receiving seat comprises a circumferential series of equidistant recesses (104) which are provided along the free edge of said annular body part inserted into said central compartment.

4. A filter as claimed in claim 3, **characterised in that** each portion of the annular body (100) between two recesses (104) comprise a depressed curved transverse surface (106) provided on the inner cylindrical surface of the annular body and having its centre of curvature outside the longitudinal axis thereof so as to present a depth which, starting from a side of the respective recess, decreases until it becomes zero before reaching the next recess.

5. A filter as claimed in claim 4, **characterised in that** beyond the zero-depth end of said depressed curved surface and spaced from it, the annular body presents an internal abutment (105) which defines said predetermined angle for releasing the cartridge.

6. A filter as claimed in claims 3 to 5, **characterised in that** that snap connection of the part (111) associated with the cover comprises a projecting sleeve which is intended to be inserted practically as an exact fit into said annular body, and from the free end of which there branch a number of longitudinal tangs (112) equal to the number of recesses (104) of said annular body, each tang being provided with an outer terminal tooth (113) to engage the bottom edge of the respective recess.

## Patentansprüche

1. Filter für Verbrennungsmotorenflüssigkeiten mit einem Gehäuse (2), welches einen ringförmigen Filtereinsatz (3) aufweist, der den Gehäusehohlraum in zwei Kammern (21,22) jeweils zum Durchgang der zu filternden Flüssigkeit und zum Durchgang der gefilterten Flüssigkeit aufweist; eine abnehmbare Abdeckung (4), die den Hohlraum verschließt und die Einlass- und Auslassrohrleitungen für die Flüssigkeit aufweist; wobei der dem Gehäuse gegenüberliegende Bereich der Abdeckung mit dem gegenüberliegenden Ende des Einsatzes mittels eines Einrastverbindungssystems verbunden ist, welches zwei Komplementärteile (10,111) aufweist, die jeweils der Abdeckung und dem Einsatz zugeordnet sind, und die durch axiales Gleiten des Einsatzes miteinander verbindbar sind,
**dadurch gekennzeichnet, dass**
der dem Einsatz zugeordnete Teil (10) des Systems innerhalb des Zentralabteils dieses letzteren angeordnet ist, und dass der der Abdeckung zugeordnete Teil (111) des Systems längliche elastische Angüsse (112) aufweist, die zur axialen Einführung in den dem Filter zugeordneten und damit gekoppelten Teil, und zum Drehen eines zuvor festgelegten Winkels geeignet sind, um davon gelöst zu werden.

2. Filter nach Anspruch 1,
**dadurch gekennzeichnet, dass**
der auf dem Einsatz installierte Systemteil (10) einen ringförmigen Körper (100) aufweist, wovon ein Teil in das Zentralabteil eingesetzt wird, wo er den Aufnahmesitz für die Einrastverbindung des Teiles (111) bereitstellt, welches auf der Abdeckung angebracht ist.

3. Filter nach Anspruch 2,
**dadurch gekennzeichnet, dass**
der Aufnahmesitz eine Umfangsreihe gleichweit beabstandeter Aussparungen (104) aufweist, die entlang der freien Kante des in das Zentralabteil eingeführten ringförmigen Körperteiles vorgesehen sind.

4. Filter nach Anspruch 3,
**dadurch gekennzeichnet, dass**
jeder Abschnitt des ringförmigen Körpers (100) zwischen zwei Aussparungen (104) eine abgesenkte gekrümmte Querfläche (106) aufweist, die auf der inneren zylindrischen Fläche des ringförmigen Körpers vorgesehen ist, und deren Krümmungsmittelpunkt außerhalb der Längsachse davon liegt, um eine Tiefe zu präsentieren, die von einer Seite der jeweiligen Aussparung ausgehend abnimmt, bis sie Null wird, bevor sie die nächste Aussparung erreicht.

5. Filter nach Anspruch 4,
**dadurch gekennzeichnet, dass**
der ringförmige Körper jenseits der Nulltiefe der abgesenkten gekrümmten Fläche, und davon beabstandet einen Innenanschlag (105) aufweist, der den zuvor bestimmten Winkel zur Freigabe des Filters festlegt.

6. Filter nach den Ansprüchen 3 bis 5,
**dadurch gekennzeichnet, dass**
die Einrastverbindung des der Abdeckung zugeordneten Teiles (111) eine hervorstehende Hülse aufweist, die vorgesehen ist, um mit praktisch genauer Passung in den ringförmigen Körper eingesetzt zu werden, wobei von dem freien Ende davon eine Anzahl von länglichen Angüssen (112) gleich der Anzahl von Aussparungen (104) des ringförmigen Körpers abzweigt, wobei jeder Anguss mit einem äußeren Verbindungszahn (113) versehen ist, um die Unterkante der jeweiligen Aussparung in Eingriff zu nehmen.

## Revendications

1. Filtre à liquides de moteur à combustion interne, comprenant un carter (2) qui contient une cartouche toroïdale (3) de filtre qui sépare la cavité du carter en deux chambres (21, 22) destinées au passage du liquide à filtrer et au passage du liquide filtré respectivement, un couvercle amovible (4) fermant la cavité et comprenant des conduits d'entrée et de sortie du liquide, la région du couvercle tournée vers le carter étant raccordée à l'extrémité en regard de la cartouche par un système de raccordement par enclenchement qui comporte deux parties complémentaires (10, 111) qui sont associées au couvercle et à la cartouche respectivement, et qui peuvent être raccordées mutuellement par coulissement axial de la cartouche, **caractérisé en ce que** la partie (10) du système associé à la cartouche est disposée dans le compartiment central de cette dernière, et la partie (111) du système associée au couvercle comporte des pattes longitudinales élastiques (112) qui sont destinées à être insérées axialement dans la partie associée à la cartouche et couplées à celle-ci, et à être tournées d'un angle prédéterminé pour en être libérées.

2. Filtre selon la revendication 1, **caractérisé en ce que** la partie (10) du système installée sur la cartouche comporte un corps annulaire (100) dont une partie est insérée dans le compartiment central dans lequel elle constitue le siège de logement pour le raccordement par enclenchement de la partie (111) qui est installée sur le couvercle.

3. Filtre selon la revendication 2, **caractérisé en ce que** le siège de logement comprend une série circonférentielle de cavités équidistantes (104) qui sont disposées le long du bord libre de la partie de corps annulaire insérée dans le compartiment central.

4. Filtre selon la revendication 3, **caractérisé en ce que** chaque portion du corps annulaire (100) comprise entre deux cavités (104) a une surface transversale courbe en creux (106) disposée à la surface cylindrique interne du corps annulaire et dont le centre de courbure est en dehors de son axe longitudinal afin qu'elle présente une profondeur qui, depuis un côté de la cavité respective, diminue jusqu'à ce qu'elle devienne nulle avant d'atteindre la cavité suivante.

5. Filtre selon la revendication 4, **caractérisé en ce que**, au-delà de l'extrémité de profondeur nulle de la surface courbe en creux et à distance de celle-ci, le corps annulaire présente une butée interne (105) qui délimite l'angle prédéterminé de libération de la cartouche.

6. Filtre selon les revendications 3 à 5, **caractérisé en ce que** le raccordement par enclenchement de la partie (111) qui est associée au couvercle comporte un manchon en saillie destiné à être inséré en pratique par ajustement exact dans le corps annulaire et à partir de l'extrémité libre duquel un nombre de pattes longitudinales (112) égal au nombre de cavités (104) du corps annulaire partent en dérivation, chaque patte ayant une dent terminale externe (113) destinée à coopérer avec le bord inférieur de la cavité respective.
